# EUROPEAN PATENT SPECIFICATION

(11) **EP 4 167 191 B1**
(45) Date of publication and mention of the grant of the patent: **14.10.2026**
(21) Application number: 21834394.5
(22) Date of filing: 21.06.2021
(51) Int. Cl.: G06T 19/00, G06F 3/01, G06F 3/0481, G06F 3/0482, G06F 3/04815, G06F 3/04817, G06F 3/04842

(54) **ELECTRONIC DEVICE AND METHOD FOR PROVIDING AUGMENTED REALITY**
ELEKTRONISCHE VORRICHTUNG UND VERFAHREN ZUR BEREITSTELLUNG VON ERWEITERTER REALITÄT
DISPOSITIF ÉLECTRONIQUE ET PROCÉDÉ DE FOURNITURE DE RÉALITÉ AUGMENTÉE

(30) Priority: 01.07.2020 KR 20200080848
(43) Date of publication of application: 19.04.2023
(60) Divisional application: 25193971.6 / 4 617 843
(73) Proprietor: Samsung Electronics Co., Ltd., Gyeonggi-do 16677 (KR)
(72) Inventor: RHO, Yeonhee, Suwon-si, Gyeonggi-do 16677 (KR); PARK, Wonkyu, Suwon-si, Gyeonggi-do 16677 (KR)
(74) Representative: HGF
(86) International application number: PCT/KR2021/007733
(87) International publication number: WO 2022/005075

(56) References cited:
- KR-A- 20150 140 043
- KR-A- 20160 023 888
- KR-A- 20170 126 295
- US-A1- 2012 176 410
- US-A1- 2013 073 988
- US-A1- 2015 325 054
- US-A1- 2018 081 520
- US-A1- 2018 095 635
- US-A1- 2018 315 246
- US-A1- 2020 081 555
- JUHA LEHIKOINEN ET AL: "Accessing Context in Wearable Computers", PERSONAL AND UBIQUITOUS COMPUTING, SPRINGER VERLAG, LONDON, GB, vol. 6, no. 1, 2 January 2002 (2002-01-02), pages 64 - 74, XP058201457, ISSN: 1617-4909, DOI: 10.1007/S007790200006

## Description

### [Technical Field]

The disclosure relates to an electronic device for providing augmented reality and an operation method thereof.

### [Background Art]

As an electronic device (e.g., an augmented reality (AR) device) capable of implementing virtual reality (VR) has been developed, there has been an increase in interest therein. Unlike VR based on a completely virtual world, the AR may overlap (combine) and show a virtual object or virtual information on an object and/or an environment in a real world, thus more increasing the effect of reality. The AR may be applied to various real environments. Particularly, the AR is attracting attention as a next-generation technology suitable for a ubiquitous environment or an internet of things (IoT) environment. US2013/073988 A1 concerns methods for acquiring, generating and displaying ranked points of interests for use in an augmented reality service provisioning system. The method for generating such ranked points of interest comprises: receiving feedback information comprising information on users interactions associated with one or more points of interest displayed as selectable graphical indicators on a screen of a mobile device and assigning popularity scores to points of interests identified in said feedback information on the basis of said user interactions; associating a point of interest in a recording list, comprising points of interests sent to one or more mobile devices in said augmented reality service provisioning system, with a popularity score assigned to points of interests identified in said feedback information; and, storing said point of interest and said popularity score in a points of interest database. US2018/081520 A1 concerns an electronic device and a method of operating the same. The electronic device includes a display, a memory, and at least one processor functionally connected to the display or the memory. The at least one processor is configured to: acquire a content type or object information associated with executed content; create a navigator using the content type or the object information; arrange the created navigator in the content; and display the navigator according to a user's gaze information. Other embodiments may also be made.

A paper entitled "Accessing Context in Wearable Computers" by Juha Lehikoinen and Riku Suomela, concerns an interaction technique for accessing location-based contextual data shown on a head-worn wearable computer display. The technique is based on a regular compass metaphor. Each object belonging to the user's current context is visualised on a linear compass shown on the screen. The object directly in front of the user is shown in the middle of the compass and can be activated. Whenever the user turns his or her head, the objects on the screen move accordingly.

US2012/176410 A1 concerns a method for ergonomically representing virtual information in a real environment, comprising the following steps: providing at least one view of a real environment and of a system setup for blending in virtual information for superimposing with the real environment in at least part of the view, the system setup comprising at least one display device, ascertaining a position and orientation of at least one part of the system setup relative to at least one component of the real environment, subdividing at least part of the view of the real environment into a plurality of regions comprising a first region and a second region, with objects of the real environment within the first region being placed closer to the system setup than objects of the real environment within the second region, and blending in at least one item of virtual information on the display device in at least part of the view of the real environment, considering the position and orientation of said at least one part of the system setup, wherein the virtual information is shown differently in the first region than in the second region with respect to the type of blending in in the view of the real environment.

### [Disclosure]

### [Technical Problem]

A user should wear an AR device to experience AR. A space where the AR device is able to provide a user with AR may be referred to as an AR space. The user may see AR of a region corresponding to a maximum viewing angle of the user by means of the AR device. AR that the user is currently viewing by means of a display of the AR device may be referred to as a user screen. Because the user screen is limited as a portion of the AR space, only an AR element (e.g., an application) located in the region corresponding to the maximum viewing angle of the user may be displayed on the user screen. The user needs to identify all of AR elements capable of being displayed on the AR space to effectively use AR provided by the AR device. For example, when the user wants to identify presence of an app which is present outside the user screen or wants to use the app, he or she needs to identify a location and a direction of the corresponding app.

### [Technical Solution]

The solution according to the invention is defined in the appended claims.

In accordance with an aspect of the disclosure, an augmented reality (AR) device supporting AR is provided. The AR device may include a memory storing data for at least one AR element mapped to an AR space, at least one sensor, a display, and a processor. The memory may store instructions, when executed, causing the processor to provide the AR outputting at least some of the at least one AR element on a field of view (FOV) region of a user as a user screen by means of the display, receive a first user input using the at least one sensor, and display a user interface on which a relative location of the at least one AR element is displayed on the user screen, in response to the first user input.

In accordance with another aspect of the disclosure, an operation method of an augmented reality (AR) device supporting AR is provided. The operation method may include providing the AR outputting at least some of at least one AR element on a field of view (FOV) region of a user as a user screen by means of a display, receiving a first user input using at least one sensor, and displaying a user interface on which a relative location of the at least one AR element is displayed on the user screen, in response to the first user input.

### [Advantageous Effects]

According to various embodiments disclosed in the disclosure, the AR device may provide a user interface such that the user identifies an AR element capable of being displayed on an AR space.

According to various embodiments disclosed in the disclosure, the AR device may provide a user and may navigate a target app, such that the user navigates the target app, or may display the target app on a user screen.

In addition, various effects ascertained directly or indirectly through the disclosure may be provided.

### [Description of Drawings]

FIG. 1 is a block diagram illustrating an electronic device in a network environment, according to various embodiments;
FIG. 2 is a block diagram illustrating a configuration of an AR device;
FIG. 3 illustrates AR provided by an AR device;
FIG. 4 illustrates a method for displaying an AR element;
FIG. 5 illustrates a user input in AR;
FIG. 6 illustrates a user interface according to an embodiment;
FIG. 7 illustrates a user interface according to an embodiment;
FIG. 8 illustrates a user interface according to an embodiment;
FIG. 9 illustrates a navigating function provided by an AR device;
FIG. 10 illustrates a bringing function provided by an AR device;
FIG. **11** illustrates a flowchart of a method for providing a user interface; and
FIG. 12 illustrates a flowchart of various user inputs to a user interface.

With regard to description of drawings, the same or similar denotations may be used for the same or similar components.

### [Mode for Invention]

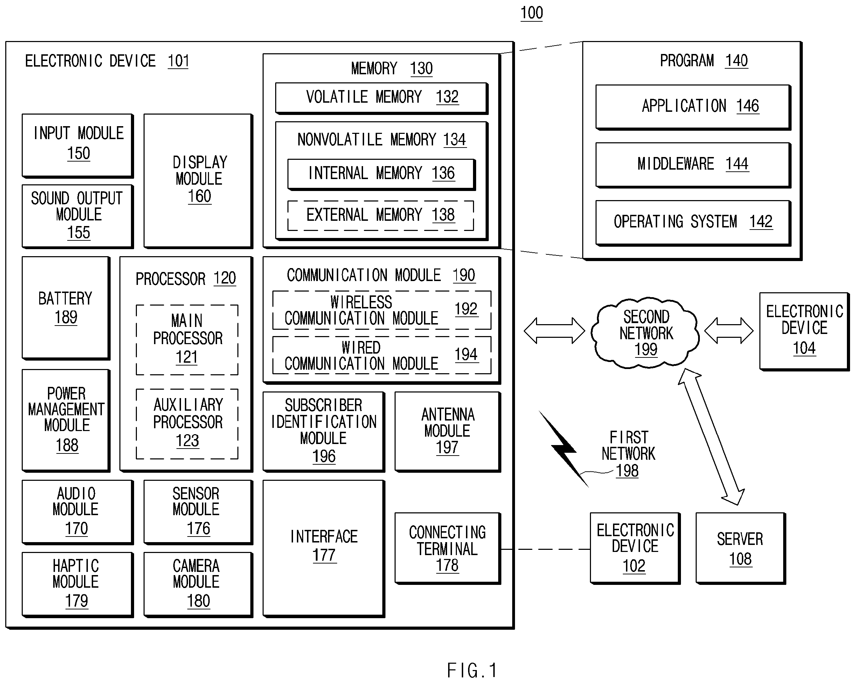

Fig. 1 is a block diagram illustrating an electronic device 101 in a network environment 100 according to various embodiments. Referring to Fig. **1****,** the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-ofthings (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

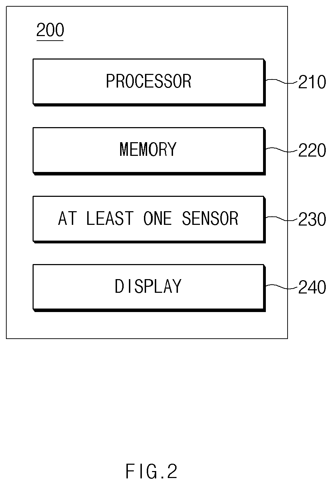

FIG. 2 is a block diagram illustrating a configuration of an AR device.

An AR device 200 (e.g., an electronic device 101 of FIG. 1) may include a processor 210, a memory 220, at least one sensor 230, and/or a display 240. The configuration of the AR device 200 of FIG. 2 is illustrative, and the AR device 200 may further include another component. For example, the AR device 200 may further include a wireless communication circuit.

The processor 210 (e.g., 120 of FIG. 1) may execute, for example, software (e.g., a program 140 of FIG. 1) to control at least one other component (e.g., a hardware or software component) of the AR device 200 connected with the processor 210 and may perform a variety of data processing and calculation. According to an embodiment, as at least a portion of data processing or calculation, the processor 210 may store commands or data received from another component (e.g., the at least one sensor 230) in a volatile memory (e.g., 132 of FIG. 1), may process the commands or data stored in the volatile memory 132, and may store result data in a non-volatile memory (e.g., 134 of FIG. 1). The processor 210 may process calculation for providing AR. The processor 210 may process calculation for providing AR by dividing it with an external device (e.g., 101 of FIG. 1) (e.g., cloud computing). For example, when the AR device 200 further includes a wireless communication circuit (e.g., 190 of FIG. 1), the processor 210 may exchange data for providing AR with the external device through the wireless communication circuit. The external device may process calculation associated with data and may transmit the data to the AR device 200.

The memory 220 (e.g., 130 of FIG. 1) may store various pieces of data used by at least one component (e.g., the processor 210 or the at least one sensor 230) of the AR device 200. The data may include, for example, input data or output data associated with software (e.g., a program 140 of FIG. 1) and a command associated with it. The memory 220 may include the volatile memory 132 or the non-volatile memory 134. The memory 220 may store data for providing AR. For example, the memory 220 may store data for AR elements mapped to an AR space.

The at least one sensor 230 (e.g., a sensor module 176 of FIG. 1) may sense an operation state (e.g., power) of the AR device 200 or an external environment state (e.g., a user state) and may generate an electrical signal or a data value corresponding to the sensed state. According to an embodiment, the at least one sensor 230 may include, for example, a gesture sensor, an acceleration sensor, a grip sensor, a proximity sensor, a color sensor, and/or a biometric sensor. The AR device 200 may detect an operation of a user using the at least one sensor 230 and may provide AR based on the operation of the user.

According to an embodiment, the display 240 (e.g., a display module 160 of FIG. 1) may visually provide information to the outside (e.g., the user) of the AR device 200. For example, the display 240 may be understood as a see-through display. The AR device 200 may output an AR element on the display 240. The user may see the AR element disposed on the AR space by means of the display 240. A space (or region) that the user is able to see by means of the display 240 of the AR device 200 in the AR space may be referred to as a user screen.

The AR device 200 may provide the user with AR by means of the display 240. The AR may be understood as the case where the AR element is output on the AR space corresponding to the user screen.

According to an embodiment, the AR device 200 may recognize an object and an environment of the AR space and may map an AR element corresponding to it to the recognized object or environment. The AR device 200 may store the mapping data in the memory 220. For example, when recognizing a TV in the AR space, the AR device 200 may map an application (e.g., an image application) associated with the TV to the TV. The mapping data may be stored in the memory 220. According to another embodiment, when further including a wireless communication circuit, the AR device 200 may receive mapping data for the AR space from a server (e.g., 108 of FIG. 1). For example, where there is a history where the AR space is already provided, mapping data for the AR space may be stored in the server (e.g., a cloud). The AR device 200 may receive mapping data from the server and may store the received mapping data in the memory 220.

The AR device 200 may bring data from the memory 220 to output an AR element on the AR space. The AR device 200 may receive a user input (e.g., a gesture) to the AR element and may provide AR in response to the user input. For example, the AR device 200 may output an application (e.g., the image application) on a specific object of the AR space and may receive a user input (e.g., a touch gesture) to run (e.g., play) the application (e.g., the image application).

The AR device 200 may obtain data associated with an operation of the user (e.g., information associated with a movement direction of the user, a movement speed of the user, a gaze direction of the user, and/or a head direction of the user) using the at least one sensor 230. For example, the operation of the user may be understood as the case where the user moves his or her body's part (e.g., a hand or a foot). When the operation of the user corresponds to a predetermined gesture, the AR device 200 may recognize the operation of the user as a user input. For example, when the user performs a specific operation (e.g., a touch gesture) with respect to an AR element (e.g., an application), the AR device 200 may recognize the operation of the user as a user input. The AR device 200 may execute the AR element (e.g., the application) in response to the user input.

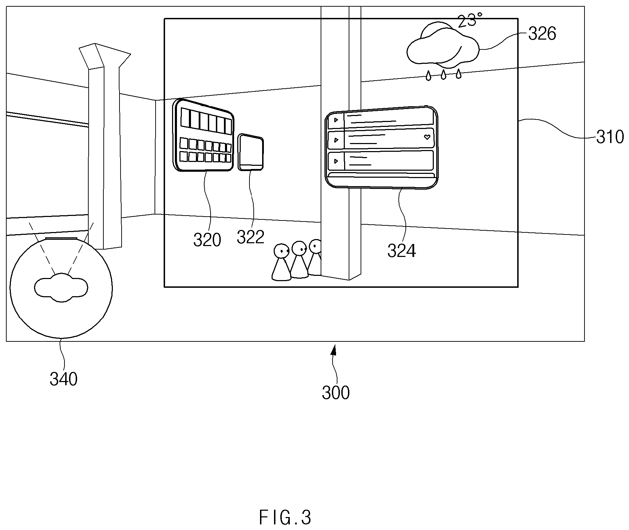

FIG. 3 illustrates AR provided by an AR device.

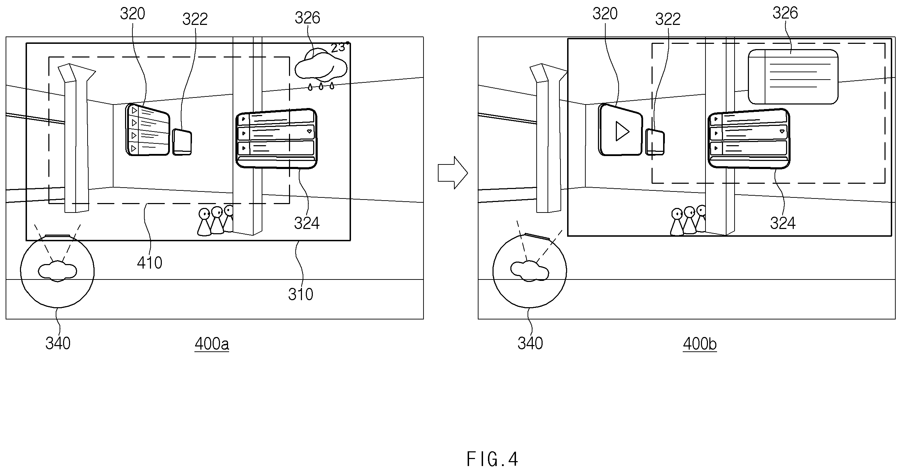

An AR space 300 of FIG. 3 may be understood as the case where the AR element is output on an object and an environment of a real space where a user and an AR device 200 are located. The AR device 200 may output AR elements 320, 322, 324, 326, and 340 on the AR space 300. In an embodiment, the AR elements 320, 322, 324, 326, and 340 may be fixed at specified locations. For example, the AR elements 320, 322, 324, 326, and 340 may be mapped to specific coordinates or objects (e.g., home appliances) in a real space. The AR elements 320, 322, 324, 326, and 340 may be displayed on a display (e.g., 240 of FIG. 2) in various forms. The forms where the AR elements 320, 322, 324, 326, and 340 are displayed will be described in detail in FIG. 4.

Because a size of a display 240 or a viewing angle of a user has a physical limit, the user may see only a portion of the AR space 300 by means of the AR device 200. For example, the user may see a region corresponding to a field of view (FOV) region 310 by means of the AR device 200. A portion of the AR space 300 provided by means of the display 240 by the AR device 200 may be referred to as a user screen. The user needs to move his or her gaze to see an AR element capable of being displayed on the outside of the user screen.

The AR elements 320, 322, 324, 326, and 340 represented on the AR space 300 are illustrative, and an embodiment of the disclosure is not limited thereto. For example, FIG. 3 illustrates the embodiment in which the AR element 340 indicating a gaze and a location of the user is output on the outside of the user screen. However, according to another embodiment, the AR element 340 may be output on the inside of the user screen. For another example, the AR element 340 indicating the gaze and the location of the user may fail to be output by the AR device 200. For another example, the AR element 340 may be output at a fixed location in the user screen.

FIG. 4 illustrates a method for displaying an AR element.

According to an embodiment, an AR device (200 of FIG. 2) may differently display AR elements 320, 322, 324, and 326 on a user screen depending on locations of the AR elements 320, 322, 324, and 326. The user screen may be referred to as AR that the user is able to see by means of a display (e.g., 240 of FIG. 2) of the AR device 200. A size of the user screen may be understood as corresponding to an FOV region (e.g., 310 of FIG. 3) of the user. The FOV region 310 may include a field of interest (FOI) region 410. The FOI region 410 may refer to a region which is smaller in size than the FOV region 310. The FOI region 410 may refer to a region that the user looks at with more interest in the FOV region 310. In an embodiment, a size of the FOI region 410 may be adjusted. For example, the AR device 200 may change an area of the FOI region 410 depending on user settings.

According to an embodiment, the AR elements 320, 322, 324, and 326 may be displayed differently according to their locations in the user screen. In 400a, the applications 320, 322, and 324 among the AR elements 320, 322, 324, and 326 may be located in the FOI region 410 and the application 326 may be located between the FOV region 310 and the FOI region 410. The AR device 200 may output the applications 320, 322, and 324 located in the FOI region 410 in the form of a preview and may output the application 326 located between the FOV region 310 and the FOI region 410 in the form of a widget. For example, the preview may be understood as a user interface in which a function of the application is partially executed. The user may user a portion of a function (e.g., image playback) capable of being used when running an application (e.g., an image application) by means of the preview. For example, the widget may be understood as a user interface which briefly displays a function and/or content (weather information) of an application (e.g., a weather application).

According to an embodiment, when the user moves his or her gaze on a user screen in 400a like a user screen in 400b to see another region of an AR space, the AR elements 320, 322, 324, and 326 may be displayed differently. For example, when the user moves his or her gaze to the right in 400a like 400b, the user screen provided by the AR device 200 may be for a region more moved to the right than that in 400a. As the user screen is moved, regions where the AR elements 320, 322, 324, and 326 are located in the user screen may vary. In 400b, the applications 322, 324, and 326 may be located in the FOI region 310, and the application 320 may be located between the FOV region 310 and the FOI region 410. Thus, the AR device 200 may output the applications 322, 324, and 326 on the display 240 in the form of a preview and may output the application 320 on the display 240 in the form of a widget. The AR device 200 may display an AR element located on a region (i.e., the FOI region 410) that the user looks at with more interest differently from another AR element, thus increasing concentration on an application that the user wants to see.

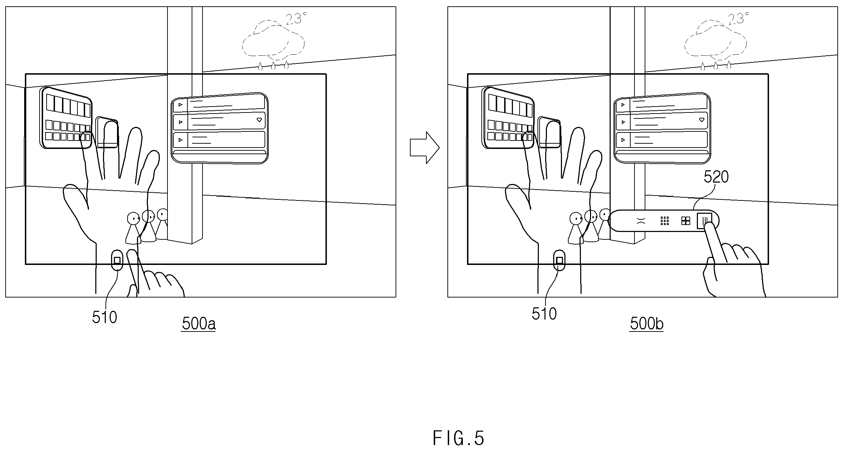

Because AR that the user is able to see by means of the AR device 200 is limited, the user needs to move his or her gaze like FIG. 4 to execute or see an AR element (e.g., a preview or a widget) outside the user screen. Alternatively, when the user does not know a location of the AR element that he or she wants to execute or see, he or she needs to navigate an AR space to navigate the location of the AR element. To solve the above-mentioned inconvenience of the user, the AR device 200 may provide a user interface (UI) for assisting in identifying, executing, and/or navigating an AR element capable of being displayed on the AR space. The UI will be described in detail in FIG. 5.

FIG. 5 illustrates a user input in AR.

An AR device (e.g., 200 of FIG. 2) may provide AR of FIGS. 2 to 4 by means of a display (e.g., 240 of FIG. 2). The AR device 200 may receive a user input to an AR element using at least one sensor (e.g., 230 of FIG. 2). For example, the user input may be understood as various gestures using a body's part (e.g., a hand or a foot)

In 500a of FIG. 5, the AR device 200 may recognize a body's part (e.g., a hand) of a user using the at least one sensor 230. The AR device 200 may recognize a body's part of the user and may output an AR element 510 capable of receiving an input of the user on the body's part of the user. Because an application 326 is located outside an FOV region (e.g., 310 of FIG. 3) in FIG. 5, it may fail to be displayed on a user screen. The AR device 200 may receive a user input to the AR element 510. For example, the user input may be referred to as a touch, swiping, and/or a double tap gesture of the user on the AR element 510. The description of the user input is illustrative, and the user input may include all gestures for selecting the AR element 510.

In 500a, the AR device 200 may output a user menu 520 in response to the user input in 500a. The user menu 520 may be understood as an AR element for outputting a user interface. The AR device 200 may receive a user input to the user menu 520 and may output a user interface described below.

FIG. 5 is an example for describing the user input for outputting the user interface, and an embodiment of the disclosure is not limited thereto. For example, the user input for outputting a user interface in 500a and 500b may be performed by one user input. For example, the AR device 200 may receive a user input to an AR element (e.g., a shortcut key) output and may output a user interface.

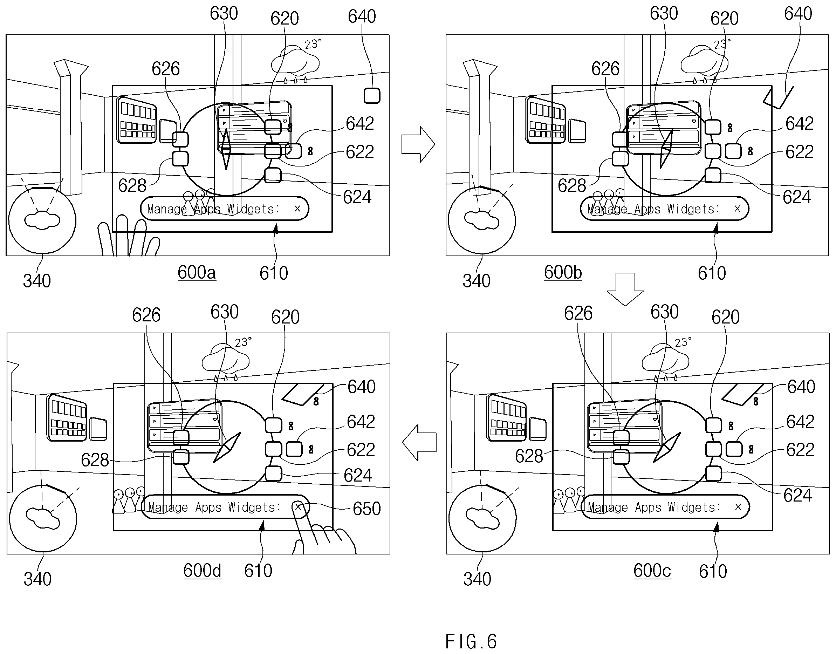

FIG. 6 illustrates a user interface according to an embodiment.

According to an embodiment, an AR device (e.g., 200 of FIG. 2) may receive a user input of FIG. 5 and may output a user interface 610. The user interface 610 may indicate types, relative locations, and/or directions of AR elements capable of being displayed on an AR space. 600a to 600d of FIG. 6 indicate the user interface 610 according to an embodiment. The user interface 610 may be provided in another method.

Referring to 600a of FIG. 6, the user interface 610 may include at least one graphic object 620, 622, 624, 626, 628 and 642 and an indicator 630 (e.g., a compass shape) indicating a direction of the AR device 200. The AR device 200 may output the user interface 610 together on an AR space (e.g., 300 of FIG. 3). The at least one graphic object 620, 622, 624, 626, 628 and 642 may correspond to AR elements (e.g., applications 320, 322, 324, and 326 of FIG. 3) capable of being displayed on the AR space. The at least one graphic object 620, 622, 624, 626, 628 and 642 may indicate relative locations and/or directions of the AR elements respectively corresponding thereto. For example, the graphic object 620 may correspond to an application 640, which may indicate a relation location and/or direction from a user of the application 640. The user, the graphic object 620, and the application 640 may be aligned in one direction on the user interface 610. The gaze and direction of the user in 660a may be displayed like an AR element 340 in 600a. The application 640 in 600a may be an AR element capable of being displayed on the outside of a user screen, which is not visible to the user. However, the AR device 200 may notify the user of a location and/or a direction of the application 640 by means of the user interface 610.

The indicator 630 may be understood as indicating locations and gaze directions of the AR device 200 and the user in the AR space. For example, a direction indicated by one side of the indicator 630 and a direction that the user is looking at in the AR element 340 may be identical to each other. When the location and the gaze direction of the user is moved, the AR device 200 may display the indicator 630 in which it is reflected on the user interface 610.

When the user moves the gaze direction and the location to the right in 600a, the AR device 200 may output the user interface 610 like 600b. The gaze direction of the user may be referenced by the AR element 340 in 600b. A description of the AR element 340 may be referenced by the description of FIG. 3. Referring to 600b, the indicator 630 may interwork with gaze movement of the user to rotate such that its one side more indicates the right than that in 600a. The user may know that the gaze direction of the user moves in a direction where the application 640 is located by means of the user interface 610.

When the user moves the gaze direction and the location to the right in 600b, the AR device 200 may output the user interface 610 like 600c. The gaze direction of the user may be referenced by the AR element 340 in 600c. Referring to 600c, the indicator 630 may interwork with gaze movement of the user to rotate such that its one side more indicate the right than that in 600b. The user may know that the gaze direction of the user is aligned with the direction where the application 640 is located by means of the user interface 610. When at least a portion of the application 640 is located in an FOV region 310 due to the location and gaze movement of the user, it may be displayed on a user screen.

600d illustrates a user input ending the user interface 610. The AR device 200 may provide an AR element 650 for ending the user interface 610. The AR device 200 may receive the user input to the AR element 650 to remove the user interface 610 and may provide AR.

The AR device 200 may provide the user interface 610 to assist the user to easily identify the relative location and direction of the AR element capable of being displayed on the AR space.

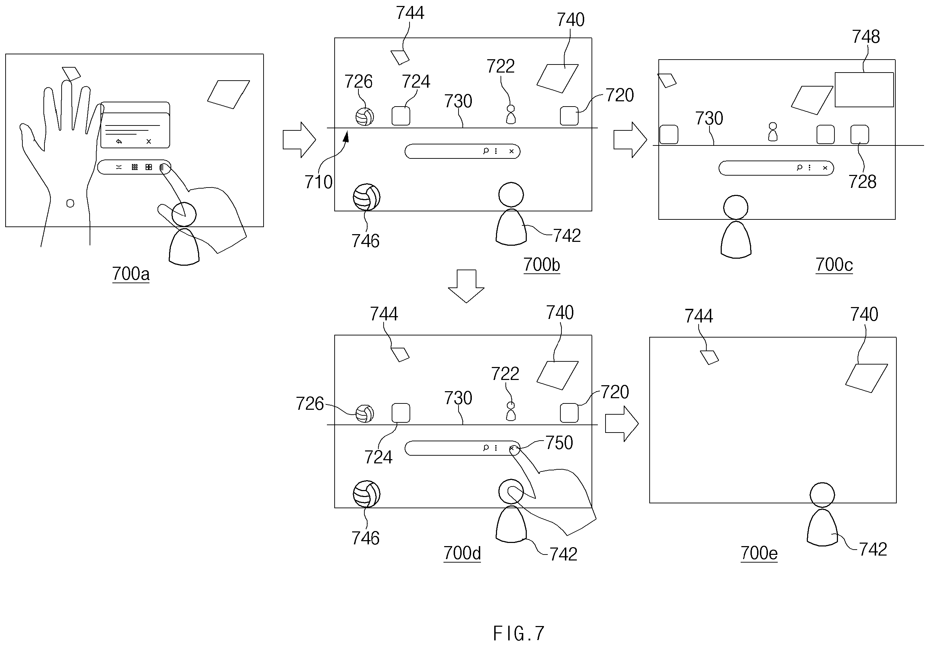

FIG. 7 illustrates a user interface according to an embodiment.

700a illustrates that an AR device 200 receives a user input of FIG. 5. A description of 700a may be referenced by the description of FIG. 5. The AR device 200 may output a user interface 710 in 700b in response to a user input.

Referring to 700b, the user interface 710 may include at least one graphic object 720, 722, 724, and 726 and a bar object 730. The at least one graphic object 720, 722, 724, and 726 may correspond to AR elements 740, 742, 744, and 746, respectively. The at least one graphic object 720, 722, 724, and 726 may indicate relative locations and directions of the corresponding AR elements 740, 742, 744, and 746 on the bar object 730. The at least one graphic object 720, 722, 724, and 726 may be displayed at the same size on the bar object 730, irrespective of distances between the corresponding AR elements 740, 742, 744, and 746 and a user. For example, because the application 722 is located in a place relatively closer to the user than the application 724, it may appear larger to the user. However, the graphic objects 622 and 624 corresponding to them may be displayed at the same size on the bar object 730.

When the gaze of the user in 700b moves to the right, the AR device 200 may output the user interface 710 like 700c. Referring to 700c, the bar object 730 may interwork with the gaze movement of the user to rotate to the right. As the bar object 730 rotates, a new application 748 may be displayed on the user screen. The AR device 200 may display a graphic object 728 corresponding to the new application 748 on the bar object 730.

700d illustrates a user input ending the user interface 710. The AR device 200 may provide an AR element 750 for ending the user interface 710. The AR device 200 may receive a user input to the AR element 750. A description of the user input may be referenced by the description of FIG. 5. The AR device 200 may remove the user interface 710 in response to the user input and may provide AR such as 700e.

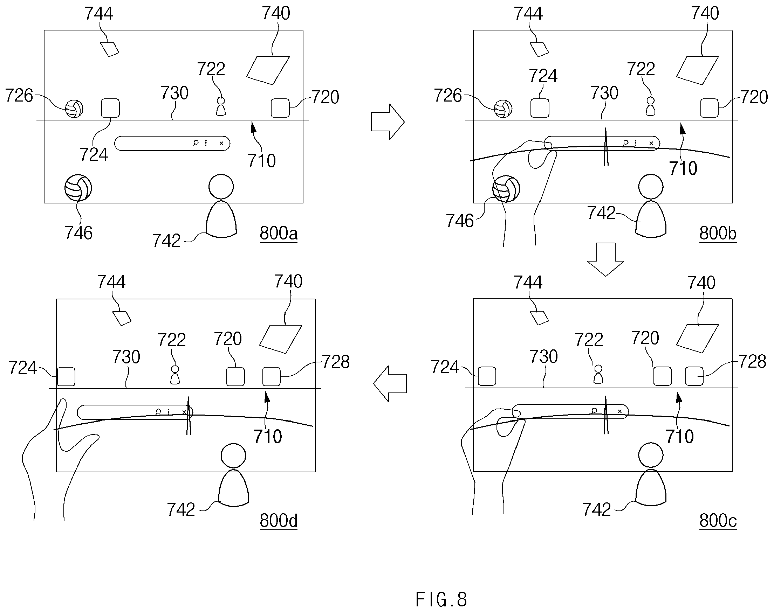

FIG. 8 illustrates a user interface according to an embodiment.

Corresponding to reference numerals of FIG. 7 among reference numerals of FIG. 8 may be referenced by the description of FIG. 7. A portion different from FIG. 7 will be described in FIG. 8, Referring to 800a, a user interface 710 may include at least one graphic object 720, 722, 724, and 726 and a bar object 730. Unlike FIG. 7, the user interface 710 of FIG. 8 may be manipulated by a user gesture (e.g., grab & release).

Referring to 800b, an AR device 200 may receive a user input and may manipulate the user interface 710. For example, a user may perform a grab operation using his or her body's part (e.g., a hand) with respect to a predetermined region of the user interface 710. After the grab operation, the user may move the body's part (e.g., the hand) to the left or right to rotate the bar object 730. When the user moves the body's part (e.g., the hand) in the state where he or she grabs the bar object 730, the bar object 730 in 800b may rotate in a counterclockwise direction like 800c. Referring to 800c, the at least one graphic object 720, 722, 724, and 726 displayed on the bar object 730 may be displayed at a location where it rotates together with the bar object 730. However, because the user input of FIG. 8 is to the user interface 710, AR may be provided irrespective of the user input. For example, when the gaze of the user is fixed, although the bar object 730 rotates from 800b to 800c, AR elements 740, 742, 744, and 746 may be displayed at fixed locations.

In FIG. 8, the user may manipulate only the bar object 730 and may identify an AR element capable of being displayed on an AR space irrespective of the gaze of the user. In this case, the at least one graphic object 720, 722, 724, 726, and 728 may fail to be aligned with AR elements 740, 742, 744, 746, and 748 respectively corresponding thereto.

Referring to 800d, the AR device 200 may receive a user input and may fix the bar object 730 in a rotated state. For example, the user input in 800d may be understood as a release operation of releasing the grab.

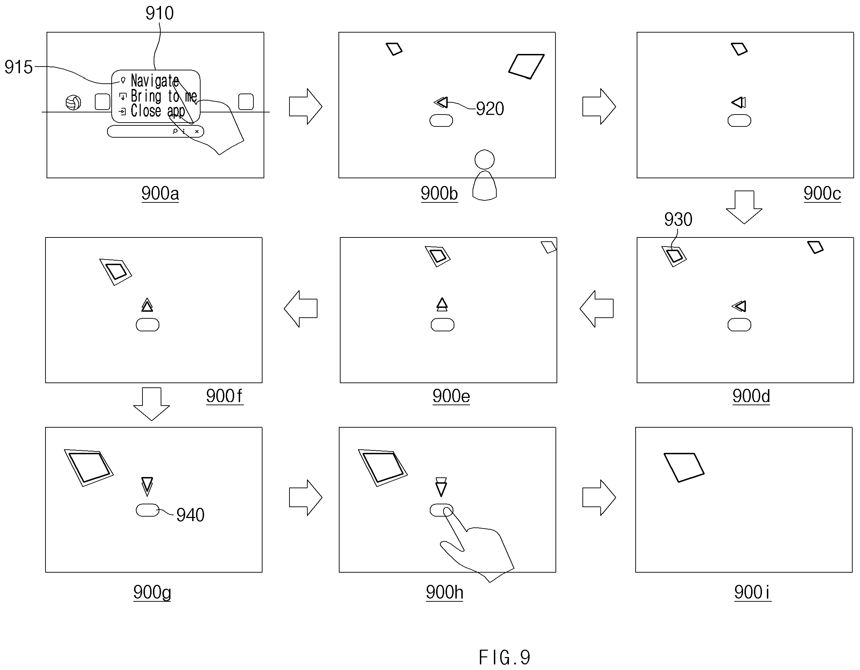

FIG. 9 illustrates a navigating function provided by an AR device.

900a is that an AR device (e.g., 200 of FIG. 2) outputs a user menu 910 for providing various functions on a user interface 710 of FIG. 8. The AR device 200 may receive a user input to the user menu 910 and may perform a navigating function. For example, the user input may be referred to as an operation where a user selects a navigate object 915 using his or her body's part (e.g., a hand). The user input to the navigate object 915 may include a user input selecting a target application which becomes a navigating target. A navigating function will be described in 900b to 990i.

In 900b, when the navigating function is executed, the AR device 200 may output an indicator 920 (e.g., an arrow) indicating a relative location and direction of the target application. The user may identify the relative location and direction of the target application by means of a direction indicated by the indicator 920.

In 900c to 900f, the user may move in a direction and location indicated by the indicator 920. For example, because the indicator 920 indicates the left in 900c, the user may move to the left along the indicator 920. In 900d, the target application may be located in a user screen. The AR device 200 may perform a separate indication to indicate that a specific application displayed on the user screen is the target application. For example, the AR device 200 may further display a quadrangular shape surrounding the target application. In 900e to 900f, the user may move in a direction where the target application is located along the indicator 920.

When the user moves in the direction of the target application and a distance between the user and the target application is within a certain distance (e.g., 100 m) as in 900g, the AR device 200 may differently output a shape of the indicator 920. In 900h, the AR device 200 may receive a user input to an AR element 940. In 900i, the AR device 200 may end the navigating function in response to the user input and may provide AR. The target application may be displayed in the form of a preview or a widget on the user screen.

The user may identify an AR element capable of being displayed on the AR space using the navigation function of FIG. 9 and may easily move to a place where the target application is located.

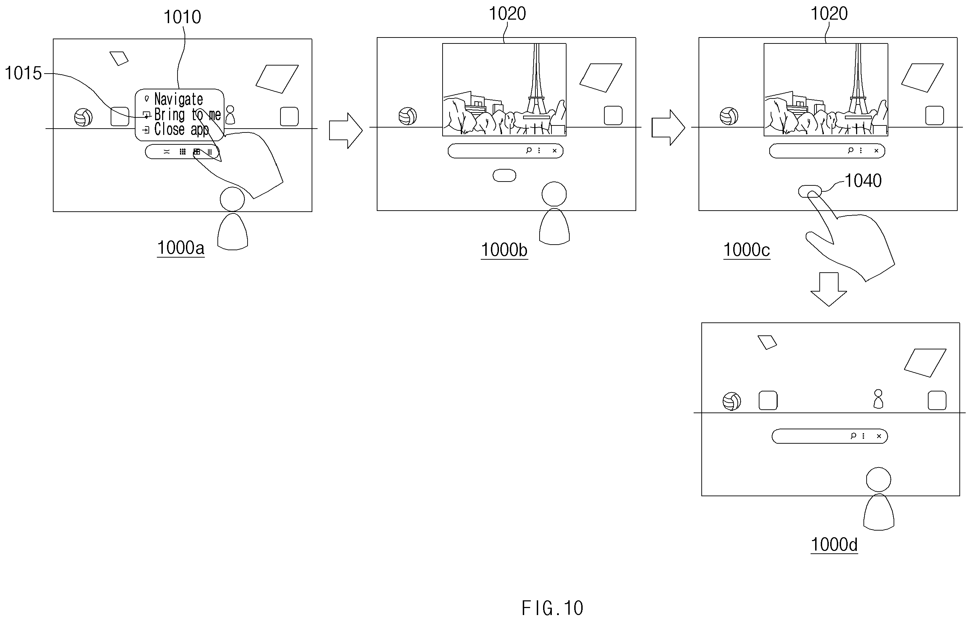

FIG. 10 illustrates a bringing function provided by an AR device.

1000a is that an AR device (e.g., 200 of FIG. 2) outputs a user menu 1010 for providing various functions on a user interface 710 of FIG. 8. The AR device 200 may receive a user input to the user menu 1010 and may perform a bringing function. For example, the user input may be referred to as an operation where a user selects a bring to me object 1015 using his or her body's part (e.g., a hand). The user input to the bring to me object 1015 may include a user input selecting a target application which becomes a bringing target. A bringing function will be described in 1000b to 1000d.

In 1000b, when the bringing function is executed, the AR device 200 may bring a target application 1020 to a user screen. The target application 1020 may be displayed or run as a preview. In 1000c, the AR device 200 may receive a user input to an AR element 1040. In 1000d, the AR device 200 may end the bringing function in response to the user input.

The user may identify an AR element located outside the user screen, using the bringing function of FIG. 10, and may display or execute the target application 1020 on the user screen.

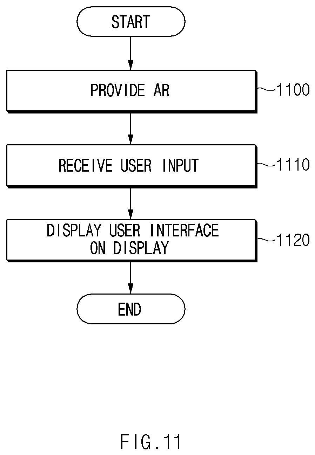

FIG. 11 illustrates a flowchart of a method for providing a user interface.

Referring to operation 1100, an AR device (e.g., 200 of FIG. 2) may provide a user with AR by means of a display (e.g., 240 of FIG. 2). The AR may be understood as outputting an AR element on an object and/or an environment located in an AR space (e.g., 300 of FIG. 3). The user may see AR corresponding to an FOV region (e.g., 310 of FIG. 3) by means of the AR device 200. A user screen may be referred to as AR that user is able of see by means of the display 240. The FOV region 310 may include an FOI region (e.g., 410 of FIG. 4). The AR element may be displayed differently according to its location in the FOV region 310. For example, the AR element located in the FOI region 410 may be displayed in the form of a preview. The AR element located between the FOI region 410 and the FOV region 310 may be displayed in the form of a widget. Because the region that the user is able to see by means of the AR device 200 is limited, the user needs to identify a location and a direction of an AR element located outside the user screen.

In operation 1110, the AR device 200 may receive a user input (e.g., a gesture) to the AR element. The user input may be performed in various methods. A description of the user input may be referenced by the description of FIG. 5. The user input in operation 1110 may be understood as a user input for outputting a user interface. The user input in operation 1110 may include one or more user inputs until the AR device 200 outputs the user interface.

In operation 1120, the AR device 200 may receive a user input and may display a user interface on the display 240. A description of the user interface may be referenced by the description of FIGS. 6 to 8. The user interface may indicate relative locations and directions of AR elements capable of being displayed on an AR space. The user may identify the relative locations and directions of the AR elements capable of being displayed on the AR space by means of the user interface.

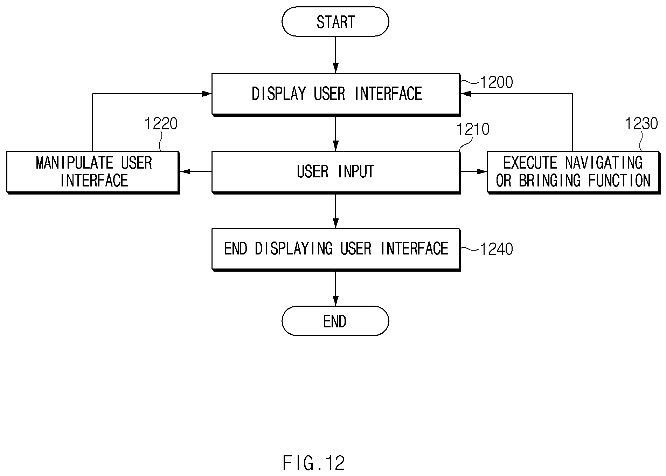

FIG. 12 illustrates a flowchart of various user inputs to a user interface.

Referring to operation 1200, an AR device (e.g., 200 of FIG. 2) may display a user interface on a display (e.g., 240 of FIG. 2) depending on the flowchart of FIG. 11. In operation 1210, the AR device 200 may receive a user input to the user interface. The user input in operation 1210 may be performed for various purposes.

According to an embodiment, the AR device 200 may receive a user input and may proceed to operation 1220. In operation 1220, the user may manipulate the user interface by means of the user input. The AR device 200 may display the user interface manipulated in response to the user input. For example, the user input may be referred to as gaze movement of the user. For another example, the user input may be referred to as a grab & release operation of the user. The user may manipulate the user interface and may more easily identify relative locations and directions of AR elements capable of being displayed on an AR space.

According to another embodiment, the AR device 200 may receive a user input and may proceed to operation 1230. In this case, the user input in operation 1230 may be understood as a user input for executing a navigating or bringing function. For example, the AR device 200 may receive a user input (e.g., a touch gesture) to a navigating object (e.g., 915 of FIG. 9) or a bringing object (e.g., 1015 of FIG. 10) in a user menu (e.g., 910 of FIG. 9 or 1010 of FIG. 10). The user input may include a user input selecting a target application (e.g., 930 of FIG. 9). In operation 1230, the AR device 200 may notify the user of a location and direction of the target application using an indicator (e.g., 920 of FIG. 9) or may bring the target application to a user screen to display or execute the target application as a preview. The user may navigate an AR element outside the user screen or may bring the AR element to the user screen, by means of the navigating or bringing function. The AR device 200 may receive a user input to an AR element (e.g., 940 of FIG. 9 or 1040 of FIG. 10) for ending the navigating or bringing function to end the navigating or bringing function and may display a user interface.

According to another embodiment, in operation 1210, the AR device 200 may receive a user input for ending the user interface. The AR device 200 may proceed to operation 1240 in response to the user input. In operation 1240, the AR device 200 may remove the user interface and may provide AR for an AR space (e.g., 300 of FIG. 3).

## Claims

1. An augmented reality, AR, device (200) supporting AR, the AR device comprising:
a memory (220) storing data for an AR element mapped to an AR space;
at least one sensor (230);
a display (240); and
a processor (210),
wherein the memory (220) stores instructions which, when executed, cause the processor (210) to: provide the AR by outputting at least some of the AR element on a field of view, FOV, region of a user as a user screen by means of the display (240), where the FOV region is a portion of the AR space 300 provided by means of the display 240 by the AR device,
wherein the user screen comprises a field of interest, FOI, region which is smaller in size than the FOV region and that corresponds to a gaze direction of a user,
**characterised in that**
the memory (220) stores instructions which, when executed, cause the processor (210) to:
output at least one first AR element that is mapped within the FOI area among the AR element mapped within the FOV area, in a first form,
output at least one second AR element that is mapped outside the FOI area among the AR element mapped within the FOV area, in a second form, and
display a user interface indicating at least one third AR element mapped outside the FOV area and a relative location for the at least one third AR element on the user screen, in response to a first user input detected via the at least one sensor (230),
wherein the at least one third AR element is outputted in a third form different than the second form.

2. The AR device (200) of claim 1,
wherein the instructions further cause the processor (210) to:
recognize the gaze direction of the user by using the at least one sensor (230),
move the displayed at least one third AR element mapped outside the FOV area and the displayed relative location for the at least one third AR element based on a movement of the user.

3. The AR device (200) of claim 1,
wherein the instructions further cause the processor (210) to:
recognize the gaze direction of the user by using the at least one sensor (230),
when the at least one third AR element that mapped outside the FOV area is moved within the FOV region based on a movement of the gaze direction of the user, output the at least one third AR element that is outputted in the third form, in the second form.

4. The AR device (200) of claim 1, wherein the instructions further cause the processor (210) to:
recognize the gaze direction of the user by using the at least one sensor (230),
when the at least one third AR element that mapped outside the FOV area is moved within the FOI region based on a movement of the gaze direction of the user, output the at least one third AR element that is outputted in the third form, in the first form.

5. The AR device (200) of claim 1, wherein the instructions further cause the processor (210) to:
receive a second user input selecting one of the at least one third AR element mapped outside the FOV area based on the at least one sensor (230); and
display a first indicator that indicates a relative direction to the selected third AR element, in response to the third user input.

6. The AR device (200) of claim 5, wherein the instructions further cause the processor (210) to:
calculate a distance between the selected third AR element and the AR device;
change the first indicator to a second indicator and display the second indicator, when the calculated distance is less than a threshold distance.

7. The AR device (200) of claim 1, wherein the instructions further cause the processor (210) to:
receive a third user input selecting one of the at least one third AR element mapped outside the FOV area based on the at least one sensor (230), and
display the selected third AR element in the first form.

8. A method of an augmented reality, AR, device (200) supporting AR, the method comprising:
providing the AR by outputting at least some of AR element on a field of view, FOV, region of a user as a user screen by means of a display (240);
wherein the user screen comprises a field of interest, FOI, region which is smaller in size than the FOV region and that corresponds to a gaze direction of a user,
**characterised in that**
the method further comprises:
outputting at least one first AR element that is mapped within the FOI area among the AR element mapped within the FOV area, in a first form,
outputting at least one second AR element that is mapped outside the FOI area among the AR element mapped within the FOV area, in a second form, and
displaying a user interface indicating at least one third AR element mapped outside the FOV area and a relative location for the at least one third AR element on the user screen, in response to a first user input detected via the at least one sensor (230),
wherein the at least one third AR element is outputted in a third form different than the second form.

9. The method of claim 8,
wherein the method further comprises:
recognizing the gaze direction of the user by using the at least one sensor (230),
moving the displayed at least one third AR element mapped outside the FOV area and the displayed relative location for the at least one third AR element based on a movement of the gaze direction of the user.

10. The method of claim 8,
wherein the method further comprises:
recognizing the gaze direction of the user by using the at least one sensor (230);
when the at least one third AR element that mapped outside the FOV area is moved within the FOV region based on a movement of the gaze direction of the user, outputting the at least one third AR element that is outputted in the third form, in the second form.

11. The method of claim 8, further comprising:
recognizing the gaze direction of the user by using the at least one sensor (230),
when the at least one third AR element that mapped outside the FOV area is moved within the FOI region based on a movement of the gaze direction of the user, outputting the at least one third AR element that is outputted in the third form, in the first form.

12. The method of claim 8, further comprising:
receiving a second user input selecting one of the at least one third AR element mapped outside the FOV area based on the at least one sensor (230); and
displaying a first indicator that indicates a relative direction to the selected third AR element, in response to the third user input.

13. The method of claim 11, further comprising:
calculating a distance between the selected third AR element and the AR device;
changing the first indicator to a second indicator and display the second indicator, when the calculated distance is less than a threshold distance.

14. The method of claim 8, further comprising:
receiving a third user input selecting one of the at least one third AR element mapped outside the FOV area based on the at least one sensor (230); and
displaying the selected third AR element in the first form.

## Patentansprüche

1. Vorrichtung für erweiterte Realität, AR, (200), die AR unterstützt, die AR-Vorrichtung umfassend:
einen Speicher (220), der Daten für ein AR-Element speichert, das einem AR-Raum zugeordnet ist;
mindestens einen Sensor (230);
eine Anzeige (240); und
einen Prozessor (210),
wobei der Speicher (220) Anweisungen speichert, die, wenn sie ausgeführt werden, den Prozessor (210) zu Folgendem veranlassen: Bereitstellen der AR durch Ausgeben mindestens eines Teils des AR-Elements in einer Region eines Sichtfelds, FOV, eines Benutzers mittels der Anzeige (240) als Benutzerbildschirm, wo die FOV-Region ein Abschnitt des AR-Raums 300 ist, der mittels der Anzeige 240 durch die AR-Vorrichtung bereitgestellt wird,
wobei der Benutzerbildschirm eine Region eines Gebiets von Interesse, FOI, umfasst, die kleiner ist als die FOV-Region und die der Blickrichtung eines Benutzers entspricht,
**dadurch gekennzeichnet, dass** der Speicher (220) Anweisungen speichert, die, wenn sie ausgeführt werden, den Prozessor (210) zu Folgendem veranlassen:
Ausgeben mindestens eines ersten AR-Elements, das innerhalb des FOI-Bereichs abgebildet ist, von den AR-Elementen, die innerhalb des FOV-Bereichs abgebildet sind, in einer ersten Form,
Ausgeben mindestens eines zweiten AR-Elements, das außerhalb des FOI-Bereichs abgebildet ist, von den AR-Elementen, die innerhalb des FOV-Bereichs abgebildet sind, in einer zweiten Form, und
Anzeigen einer Benutzeroberfläche, die mindestens ein drittes AR-Element, das außerhalb des FOV-Bereichs abgebildet ist, und einer relativen Position für das mindestens eine dritte AR-Element auf dem Benutzerbildschirm, als Reaktion auf eine erste Benutzereingabe, die über den mindestens einen Sensor (230) erfasst wird,
wobei das mindestens eine dritte AR-Element in einer dritten Form ausgegeben wird, die sich von der zweiten Form unterscheidet.

2. AR-Vorrichtung (200) nach Anspruch 1, wobei die Anweisungen den Prozessor (210) ferner zu Folgendem veranlassen:
Erkennen der Blickrichtung des Benutzers unter Verwendung des mindestens einen Sensors (230), Bewegen des angezeigten mindestens einen dritten AR-Elements, das außerhalb des FOV-Bereichs abgebildet ist, und der angezeigten relativen Position für das mindestens eine dritte AR-Element basierend auf einer Bewegung des Benutzers.

3. AR-Vorrichtung (200) nach Anspruch 1, wobei die Anweisungen den Prozessor (210) ferner zu Folgendem veranlassen:
Erkennen der Blickrichtung des Benutzers unter Verwendung des mindestens einen Sensors (230),wenn das mindestens eine dritte AR-Element, das außerhalb des FOV-Bereichs abgebildet ist, basierend auf einer Bewegung der Blickrichtung des Benutzers in die FOV-Region bewegt wird, Ausgeben des mindestens einen dritten AR-Elements, das in der dritten Form ausgegeben wird, in der zweiten Form.

4. AR-Vorrichtung (200) nach Anspruch 1, wobei die Anweisungen den Prozessor (210) ferner zu Folgendem veranlassen:
Erkennen der Blickrichtung des Benutzers unter Verwendung des mindestens einen Sensors (230), wenn das mindestens eine dritte AR-Element, das außerhalb des FOV-Bereichs abgebildet ist, basierend auf einer Bewegung der Blickrichtung des Benutzers in die FOI-Region bewegt wird, Ausgeben des mindestens einen dritten AR-Elements, das in der dritten Form ausgegeben wird, in der ersten Form.

5. AR-Vorrichtung (200) nach Anspruch 1, wobei die Anweisungen den Prozessor (210) ferner zu Folgendem veranlassen:
Empfangen einer zweiten Benutzereingabe, durch die eines des mindestens einen dritten AR-Elements ausgewählt wird, das basierend auf dem mindestens einen Sensor (230) außerhalb des FOV-Bereichs abgebildet ist; und
Anzeigen eines ersten Indikators, der eine relative Richtung zu dem ausgewählten dritten AR-Element angibt, als Reaktion auf die dritte Benutzereingabe.

6. AR-Vorrichtung (200) nach Anspruch 5, wobei die Anweisungen den Prozessor (210) ferner zu Folgendem veranlassen:
Berechnen einer Entfernung zwischen dem ausgewählten dritten AR-Element und der AR-Vorrichtung;
Ändern des ersten Indikators zu einem zweiten Indikator und Anzeigen des zweiten Indikators, wenn die berechnete Entfernung kleiner ist als ein Entfernungsschwellenwert.

7. AR-Vorrichtung (200) nach Anspruch 1, wobei die Anweisungen den Prozessor (210) ferner zu Folgendem veranlassen:
Empfangen einer dritten Benutzereingabe, durch die eines des mindestens einen dritten AR-Elements ausgewählt wird, das basierend auf dem mindestens einen Sensor (230) außerhalb des FOV-Bereichs abgebildet ist, und
Anzeigen des ausgewählten dritten AR-Elements in der ersten Form.

8. Verfahren einer Vorrichtung für erweiterte Realität, AR, (200), die AR unterstützt, das Verfahren umfassend:
Bereitstellen der AR durch Ausgeben mindestens eines Teils eines AR-Elements in einer Region eines Sichtfelds, FOV, eines Benutzers mittels der Anzeige (240) als Benutzerbildschirm;
wobei der Benutzerbildschirm eine Region eines Gebiets von Interesse, FOI, umfasst, die kleiner ist als die FOV-Region und die der Blickrichtung eines Benutzers entspricht,
**dadurch gekennzeichnet, dass** das Verfahren ferner Folgendes umfasst:
Ausgeben mindestens eines ersten AR-Elements, das innerhalb des FOI-Bereichs abgebildet ist, von den AR-Elementen, die innerhalb des FOV-Bereichs abgebildet sind, in einer ersten Form,
Ausgeben mindestens eines zweiten AR-Elements, das außerhalb des FOI-Bereichs abgebildet ist, von den AR-Elementen, die innerhalb des FOV-Bereichs abgebildet sind, in einer zweiten Form, und
Anzeigen einer Benutzeroberfläche, die mindestens ein drittes AR-Element, das außerhalb des FOV-Bereichs abgebildet ist, und einer relativen Position für das mindestens eine dritte AR-Element auf dem Benutzerbildschirm, als Reaktion auf eine erste Benutzereingabe, die über den mindestens einen Sensor (230) erfasst wird,
wobei das mindestens eine dritte AR-Element in einer dritten Form ausgegeben wird, die sich von der zweiten Form unterscheidet.

9. Verfahren nach Anspruch 8, wobei das Verfahren ferner Folgendes umfasst:
Erkennen der Blickrichtung des Benutzers unter Verwendung des mindestens einen Sensors (230),
Bewegen des angezeigten mindestens einen dritten AR-Elements, das außerhalb des FOV-Bereichs abgebildet ist, und der angezeigten relativen Position für das mindestens eine dritte AR-Element basierend auf einer Bewegung der Blickrichtung des Benutzers.

10. Verfahren nach Anspruch 8, wobei das Verfahren ferner Folgendes umfasst:
Erkennen der Blickrichtung des Benutzers unter Verwendung des mindestens einen Sensors (230);
wenn das mindestens eine dritte AR-Element, das außerhalb des FOV-Bereichs abgebildet ist, basierend auf einer Bewegung der Blickrichtung des Benutzers in die FOV-Region bewegt wird, Ausgeben des mindestens einen dritten AR-Elements, das in der dritten Form ausgegeben wird, in der zweiten Form.

11. Verfahren nach Anspruch 8, ferner umfassend:
Erkennen der Blickrichtung des Benutzers unter Verwendung des mindestens einen Sensors (230),
wenn das mindestens eine dritte AR-Element, das außerhalb des FOV-Bereichs abgebildet ist, basierend auf einer Bewegung der Blickrichtung des Benutzers in die FOI-Region bewegt wird, Ausgeben des mindestens einen dritten AR-Elements, das in der dritten Form ausgegeben wird, in der ersten Form.

12. Verfahren nach Anspruch 8, ferner umfassend:
Empfangen einer zweiten Benutzereingabe, durch die eines des mindestens einen dritten AR-Elements ausgewählt wird, das basierend auf dem mindestens einen Sensor (230) außerhalb des FOV-Bereichs abgebildet ist; und
Anzeigen eines ersten Indikators, der eine relative Richtung zu dem ausgewählten dritten AR-Element angibt, als Reaktion auf die dritte Benutzereingabe.

13. Verfahren nach Anspruch 11, ferner umfassend:
Berechnen einer Entfernung zwischen dem ausgewählten dritten AR-Element und der AR-Vorrichtung;
Ändern des ersten Indikators zu einem zweiten Indikator und Anzeigen des zweiten Indikators, wenn die berechnete Entfernung kleiner ist als ein Entfernungsschwellenwert.

14. Verfahren nach Anspruch 8, ferner umfassend:
Empfangen einer dritten Benutzereingabe, durch die eines des mindestens einen dritten AR-Elements ausgewählt wird, das basierend auf dem mindestens einen Sensor (230) außerhalb des FOV-Bereichs abgebildet ist; und
Anzeigen des ausgewählten dritten AR-Elements in der ersten Form.

## Revendications

1. Dispositif de réalité augmentée, AR, (200) prenant en charge l'AR, le dispositif AR comprenant :
une mémoire (220) stockant des données pour un élément AR mappé à un espace AR ;
au moins un capteur (230) ;
un affichage (240) ; et
un processeur (210),
dans lequel la mémoire (220) stocke des instructions qui, lorsqu'elles sont exécutées, amènent le processeur (210) à : fournir l'AR en sortant au moins une partie de l'élément AR sur une région de champ de vision, FOV, d'un utilisateur en tant qu'écran utilisateur au moyen de l'affichage (240), où la région FOV est une portion de l'espace AR 300 fourni au moyen de l'affichage 240 par le dispositif AR,
dans lequel l'écran utilisateur comprend une région de champ d'intérêt, FOI, qui est plus petite en taille que la région FOV et qui correspond à une direction de regard d'un utilisateur,
**caractérisé en ce que** la mémoire (220) stocke des instructions qui, lorsqu'elles sont exécutées, amènent le processeur (210) à :
sortir au moins un premier élément AR qui est mappé à l'intérieur de la zone FOI parmi l'élément AR mappé à l'intérieur de la zone FOV, sous une première forme,
sortir au moins un deuxième élément AR qui est mappé à l'extérieur de la zone FOI parmi l'élément AR mappé à l'intérieur de la zone FOV, sous une deuxième forme, et
afficher une interface utilisateur indiquant au moins un troisième élément AR mappé à l'extérieur de la zone FOV et un emplacement relatif pour l'au moins un troisième élément AR sur l'écran utilisateur, en réponse à une première entrée utilisateur détectée via l'au moins un capteur (230),
dans lequel l'au moins un troisième élément AR est sorti sous une troisième forme différente de la deuxième forme.

2. Dispositif AR (200) selon la revendication 1,
dans lequel les instructions amènent en outre le processeur (210) à :
reconnaître la direction de regard de l'utilisateur en utilisant l'au moins un capteur (230),
déplacer l'au moins un troisième élément AR affiché mappé à l'extérieur de la zone FOV et l'emplacement relatif affiché pour l'au moins un troisième élément AR sur la base d'un déplacement de l'utilisateur.

3. Dispositif AR (200) selon la revendication 1,
dans lequel les instructions amènent en outre le processeur (210) à :
reconnaître la direction de regard de l'utilisateur en utilisant l'au moins un capteur (230),
lorsque l'au moins un troisième élément AR qui est mappé à l'extérieur de la zone FOV est déplacé à l'intérieur de la région FOV sur la base d'un déplacement de la direction de regard de l'utilisateur, sortir l'au moins un troisième élément AR qui est sorti sous la troisième forme, sous la deuxième forme.

4. Dispositif AR (200) selon la revendication 1, dans lequel les instructions amènent en outre le processeur (210) à :
reconnaître la direction de regard de l'utilisateur en utilisant l'au moins un capteur (230),
lorsque l'au moins un troisième élément AR qui est mappé à l'extérieur de la zone FOV est déplacé à l'intérieur de la région FOI sur la base d'un déplacement de la direction de regard de l'utilisateur, sortir l'au moins un troisième élément AR qui est sorti sous la troisième forme, sous la première forme.

5. Dispositif AR (200) selon la revendication 1, dans lequel les instructions amènent en outre le processeur (210) à :
recevoir une deuxième entrée utilisateur sélectionnant l'un de l'au moins un troisième élément AR mappé à l'extérieur de la zone FOV sur la base de l'au moins un capteur (230) ; et
afficher un premier indicateur qui indique une direction relative par rapport au troisième élément AR sélectionné, en réponse à la troisième entrée utilisateur.

6. Dispositif AR (200) selon la revendication 5, dans lequel les instructions amènent en outre le processeur (210) à :
calculer une distance entre le troisième élément AR sélectionné et le dispositif AR ;
changer le premier indicateur en un second indicateur et afficher le second indicateur, lorsque la distance calculée est inférieure à une distance de seuil.

7. Dispositif AR (200) selon la revendication 1, dans lequel les instructions amènent en outre le processeur (210) à :
recevoir une troisième entrée utilisateur sélectionnant l'un de l'au moins un troisième élément AR mappé à l'extérieur de la zone FOV sur la base de l'au moins un capteur (230), et
afficher le troisième élément AR sélectionné sous la première forme.

8. Procédé d'un dispositif de réalité augmentée, AR, (200) prenant en charge l'AR, le procédé comprenant :
la fourniture de l'AR en sortant au moins une partie de l'élément AR sur une région de champ de vision, FOV, d'un utilisateur en tant qu'écran utilisateur au moyen d'un affichage (240) ;
dans lequel l'écran utilisateur comprend une région de champ d'intérêt, FOI, qui est plus petite en taille que la région FOV et qui correspond à une direction de regard d'un utilisateur,
**caractérisé en ce que** le procédé comprend en outre :
la sortie d'au moins un premier élément AR qui est mappé à l'intérieur de la zone FOI parmi l'élément AR mappé à l'intérieur de la zone FOV, sous une première forme, et
la sortie d'au moins un deuxième élément AR qui est mappé à l'extérieur de la zone FOI parmi l'élément AR mappé à l'intérieur de la zone FOV, sous une deuxième forme, et
l'affichage d'une interface utilisateur indiquant au moins un troisième élément AR mappé à l'extérieur de la zone FOV et un emplacement relatif pour l'au moins un troisième élément AR sur l'écran utilisateur, en réponse à une première entrée utilisateur détectée via l'au moins un capteur (230),
dans lequel l'au moins un troisième élément AR est sorti sous une troisième forme différente de la deuxième forme.

9. Procédé selon la revendication 8,
dans lequel le procédé comprend en outre :
la reconnaissance de la direction de regard de l'utilisateur en utilisant l'au moins un capteur (230),
le déplacement de l'au moins un troisième élément AR affiché qui est mappé à l'extérieur de la zone FOV et de l'emplacement relatif affiché pour l'au moins un troisième élément AR sur la base d'un déplacement de la direction de regard de l'utilisateur.

10. Procédé selon la revendication 8,
dans lequel le procédé comprend en outre :
la reconnaissance de la direction de regard de l'utilisateur en utilisant l'au moins un capteur (230) ;
lorsque l'au moins un troisième élément AR qui est mappé à l'extérieur de la zone FOV est déplacé à l'intérieur de la région FOV sur la base d'un déplacement de la direction de regard de l'utilisateur, la sortie de l'au moins un troisième élément AR qui est sorti sous la troisième forme, sous la deuxième forme.

11. Procédé selon la revendication 8, comprenant en outre :
la reconnaissance de la direction de regard de l'utilisateur en utilisant l'au moins un capteur (230),
lorsque l'au moins un troisième élément AR qui est mappé à l'extérieur de la zone FOV est déplacé à l'intérieur de la région FOI sur la base d'un déplacement de la direction de regard de l'utilisateur, la sortie de l'au moins un troisième élément AR qui est sorti sous la troisième forme, sous la première forme.

12. Procédé selon la revendication 8, comprenant en outre :
la réception d'une deuxième entrée utilisateur sélectionnant l'un de l'au moins un troisième élément AR qui est mappé à l'extérieur de la zone FOV sur la base de l'au moins un capteur (230) ; et
l'affichage d'un premier indicateur qui indique une direction relative par rapport au troisième élément AR sélectionné, en réponse à la troisième entrée utilisateur.

13. Procédé selon la revendication 11, comprenant en outre :
le calcul d'une distance entre le troisième élément AR sélectionné et le dispositif AR ;
le changement du premier indicateur en un second indicateur et l'affichage du second indicateur, lorsque la distance calculée est inférieure à une distance de seuil.

14. Procédé selon la revendication 8, comprenant en outre :
la réception d'une troisième entrée utilisateur sélectionnant l'un de l'au moins un troisième élément AR mappé à l'extérieur de la zone FOV sur la base de l'au moins un capteur (230) ; et
l'affichage du troisième élément AR sélectionné sous la première forme.
